**Europäisches Patentamt**

**European Patent Office**

**Office européen des brevets**

(11) Veröffentlichungsnummer: **0 008 305**
**A1**

(12) **EUROPÄISCHE PATENTANMELDUNG**

(21) Anmeldenummer: **78100632.5**

(22) Anmeldetag: **09.08.78**

(51) Int. Cl.³: **F 16 H 21/48**
**B 62 D 3/00**

(43) Veröffentlichungstag der Anmeldung:
**05.06.80 Patentblatt 80/5**

(84) Benannte Vertragsstaaten:
**DE**

(71) Anmelder: **BAYERISCHE MOTOREN WERKE**
**Aktiengesellschaft**
**Postfach 40 02 40**
**D-8000 München 40(DE)**

(72) Erfinder: **Matschinsky, Wolfgang, Dipl.-Ing.**
**Korbinianplatz 9**
**D-8000 München 40(DE)**

(54) **Lenkgetriebe mit veränderlichem Übersetzungsverhältnis für Kraftfahrzeuge.**

(57) Bei Lenkgetrieben für Kraftfahrzeuge werden veränderliche Übersetzungsverhältnisse zwischen der Lenkspindel (3) und der einen Lenkstockhebel (7) tragenden Lenkwelle (8) angestrebt. Ohne Hilfskraftunterstützung soll wegen der beim Einschlagen der Räder in der Regel zunehmenden Lenkkräfte das Übersetzungsverhältnis mit zunehmenden Radeinschlag größer ("indirekter") werden, um die Lenkradkräfte in Grenzen zu halten. Mit Hilfskraftunterstützung, mit der die Lenkkräfte mühelos aufgebracht werden, soll die Übersetzung mit zunehmenden Radeinschlag geringer ("direkter") werden, um die Zahl der beispielsweise beim Einparken erforderlichen Lenkradumdrehungen niedrig zu halten.

Um dies zu ermöglichen ist die Abtriebswelle (6) des eigentlichen Getriebesatzes (2) mit der Lenkwelle (8) über ein Kardangelenk (2) verbunden, wobei außerdem die Abtriebswelle (6) und die Lenkwelle (8) zueinander geneigt sind.

Zum Zweck einer in Geradeausstellung der Räder "direkteren" Übersetzung verläuft die mit der Lenkwelle (8) verbundene Drehachse (14) des Kardangelenks (2) in Geraudeausstellung der Räder senkrecht zu der die Achsen (10, 11) der Lenkwelle (8) und der Abtriebswelle (6) enthaltenden Ebene (E). Zum Zweck einer in Geradeausstellung der Räder mehr "indirekten" Übersetzung verläuft die erwähnte Drehachse (14) in dieser Ebene (E).

./...

_Fig.1_

_Fig.2_

- 1 -

BAYERISCHE MOTOREN WERKE AKTIENGESELLSCHAFT, 8000 München 40
4. August 1978

"Lenkgetriebe mit veränderlichem Übersetzungsverhältnis
für Kraftfahrzeuge"

Die Erfindung bezieht sich auf ein Lenkgetriebe mit veränderlichem Übersetzungsverhältnis für Kraftfahrzeuge,
mit einem Getriebesatz, der einerseits mit einer Lenkspindel und andererseits mit einer einen Lenkstockhebel
od.dergl. tragenden Lenkwelle in Verbindung steht.

Veränderliche Übersetzungsverhältnisse in Lenkgetrieben
werden unter zwei Gesichtspunkten angestrebt. Zum Einen
kann es wünschenswert sein, in Geradeausstellung der zu
lenkenden Räder die geringste Übersetzung zu haben, wobei
man dann von einer "direkten" Lenkung spricht. Insbesondere
bei manuellen Lenkungen (ohne Hilfskraftunterstützung)
wünscht man eine direkte Übersetzung in Geradeausstellung
der Räder und eine mehr indirekte Übersetzung in den Endlagen der Räder, da die am Lenkrad aufzubringenden Kräfte
meist mit dem Einschlagen der Räder zunehmen. Bei Lenkungen
mit Hilfskraftunterstützung wird auf der anderen Seite eine
mit dem Einschlagen geringer werdende Übersetzung angestrebt,
um wenig Umdrehungen des Lenkrads, etwa beim Einparken,
zu erhalten.

Ein bekanntes Lenkgetriebe der eingangs genannten Art (DE - AS 12 09 011) weist als Getriebesatz eine Schnecke mit in den beiden Endbereichen zunehmender Schneckengangsteigung auf, in die ein mit einer Lenkstockwelle verbundener Fingerhebel eingreift.

Bei einem anderen (aus der DE - AS 11 55 987) bekannten Lenkgetriebe für eine Zahnstangenlenkung finden exzentrische Zahnräder zusammen mit Zahnstangen Verwendung, deren Verzahnung entsprechend gekrümmt ist.

Durch die DE - AS 11 24 835 ist schließlich noch eine Lenkung von stärker abweichender Gattung bekannt, bei der das veränderliche Übersetzungsverhältnis entweder durch Variieren der wirksamen Hebellänge des Lenkstockhebels oder durch Zwischenschalten eines stufenlos regelbaren Getriebes in die Lenkspindel erhalten wird.

Alle diese Bauarten erfordern einen hohen Bauaufwand, weshalb sie teuer sind und trotzdem störanfällig sein dürften.

Der vorliegenden Erfindung liegt die Aufgabe zugrunde, ein Lenkgetriebe der eingangs genannten Gattung zu schaffen, bei dem mit verhältnismäßig einfachen Mitteln ein veränderliches Übersetzungsverhältnis erreichbar ist und das ohne größere Konstruktionsänderung sowohl für "direkte" als auch für "indirektere" Lenkungen verwendbar ist.

Diese Aufgabe wird erfindungsgemäß dadurch gelöst, daß die Abtriebswelle des Getriebesatzes mit der Lenkwelle über ein Kardangelenk verbunden ist und die Achsen der Abtriebswelle und der Lenkwelle zueinander geneigt sind.

Die Erfindung geht von dem Grundgedanken aus, den in
aller Regel störenden "Kardanfehler" eines Kardangelenks
bei Kombination eines Kardangelenks mit einem konventionellen Lenkgetriebe positiv zu nutzen, um ein veränderliches Übersetzungsverhältnis zu erhalten. Verglichen mit
den vorbekannten Konstruktionen ist ein Kardangelenk ein
wesentlich einfacheres Bauelement, das verhältnismäßig
preisgünstig, spielfrei und wartungsarm ist.

Wird eine in Geradeausstellung der Räder möglichst "direkt"
wirkende Übersetzung gewünscht, so verläuft dabei nach
einer zweckmäßigen Ausgestaltung der Erfindung die mit der
Lenkwelle verbundene Drehachse des Kardangelenks senkrecht
zu der die Achsen der Lenkwelle und der Abtriebswelle des
Getriebesatzes enthaltenden Ebene.

Soll, etwa für Lenkungen mit Hilfskraftunterstützung,
in Geradeausstellung der gelenkten Räder eine mehr "indirekte" Übersetzung vorhanden sein, die mit zunehmendem
Radeinschlag zur Verringerung der Lenkradumdrehungen beim
Parkieren geringer wird, so kann nach einer weiteren Ausgestaltung der Erfindung auch die mit der Lenkwelle verbundene Drehachse des Kardangelenks in Geradeausstellung
der gelenkten Räder in der die Achsen der Lenkwelle und
Abtriebswelle enthaltenden Ebene liegen.

Für Versuchszwecke kann es darüberhinaus vorteilhaft sein,
wenn die Neigung zwischen der Achse der Lenkwelle und der
Achse der Abtriebswelle veränderbar ist. Das Lenkgehäuse
kann hierzu aus zwei zueinander verschwenkbaren Gehäuseabschnitten bestehen. Auf diese Weise kann - mit geeigneten
Verstellmitteln unter Umständen sogar während der Fahrtdie Lenkübersetzung verstellt werden, sodaß beispielsweise die Auswahl einer in Geradeausstellung der Räder für

- 4 -

das Fahrverhalten besonders wichtigen optimalen Übersetzung möglich ist.

Die Erfindung ist im folgenden anhand zweier in der Zeichnung dargestellter Ausführungsbeispiele näher beschrieben.

Es zeigen:

Fig. 1    eine erste Ausführungsform des neuen
Lenkgetriebes im Schnitt;

Fig. 2    einen Schnitt nach der Linie II - II in
Fig. 1;

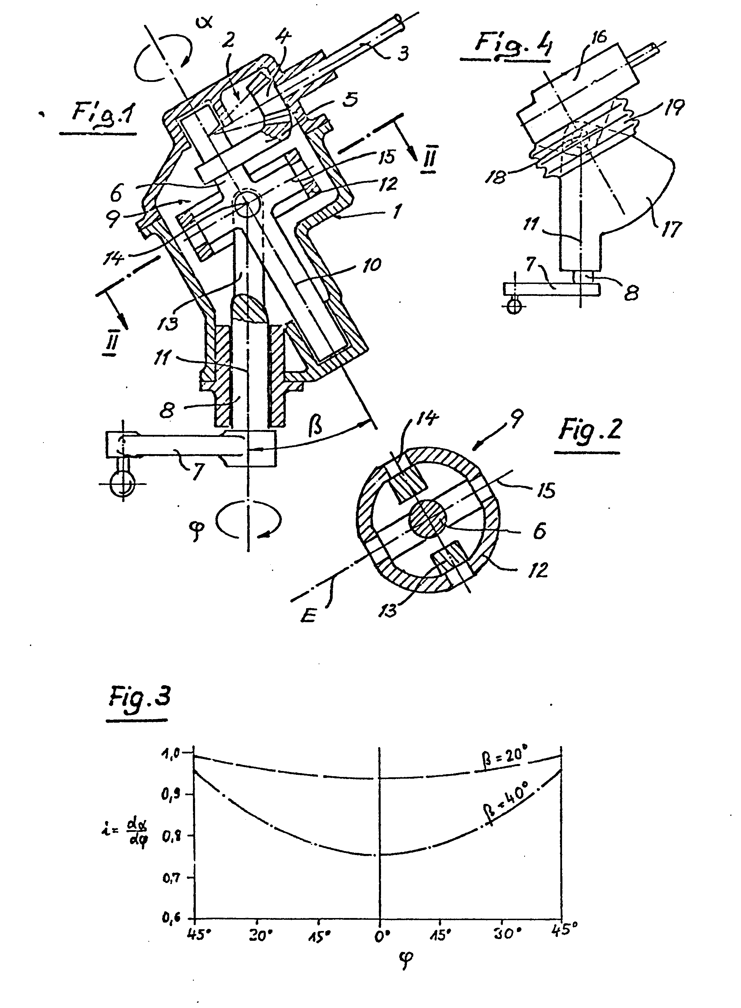

Fig. 3    ein Diagramm mit dem Übersetzungsverlauf und

Fig. 4    die Ansicht einer etwas abgewandelten
Ausführungsform.

Bei dem in Fig. 1 dargestellten Ausführungsbeispiel ist
in dem mehrteiligen Lenkgehäuse 1 ein Getriebesatz 2 gelagert, der aus einem mit der Lenkspindel 3 verbundenen
Kegelradritzel 4 und einem Tellerradsegment 5 besteht.

Die Abtriebswelle 6 des Getriebesatzes 2 ist mit der einen
Lenkstockhebel 7 tragenden Lenkwelle 8 über ein Kardangelenk 9 verbunden. Die Achse 10 der Abtriebswelle 6 ist zu
der Achse 11 der Lenkwelle 8 um den Winkel $\beta$ geneigt.
Anstelle des dargestellten Getriebesatzes 2 könnte auch
ein anderer Getriebesatz, beispielsweise aus Schnecke und
Schneckenrad, Verwendung finden.

Das Kardangelenk 9 umfaßt einen Kardanring 12, mit dem
einerseits die an der Lenkwelle ausgebildete Gelenkgabel
13 um eine Drehachse 14 und andererseits die Abtriebswelle
6 um eine weitere Drehachse 15 schwenkbar verbunden sind.
Bei dem dargestellten Ausführungsbeispiel ist, wie man
erkennt, das Gelenkkreuz des Kardangelenks 9 einstückig
mit der Abtriebswelle 6 des Getriebesatzes 2 ausgebildet.

Ferner liegen die Achsen 10 und 11 der Abtriebswelle 6
und der Lenkwelle 8 zumindest annähernd in einer lotrechten Fahrzeuglängsebene des nicht weiter dargestellten
Kraftfahrzeugs. In Geradeausstellung der gelenkten Räder
des Kraftfahrzeugs verläuft die mit der Lenkwelle 8
verbundene Drehachse 14 des Kardangelenks 9 senkrecht zu
der die Achsen 10 und 11 der Lenkwelle 8 und der Abtriebswelle 6 enthaltenden Ebene E.

In dem Diagramm nach Fig. 3 ist angegeben, wie sich bei
einem Neigungswinkel $\beta$ von 20° bzw. 40° bei verschiedenen
Winkelstellungen $\varphi$ des Lenkstockhebels 7, das Verhältnis
$\frac{d\alpha}{d\varphi}$, d.h. die dem eigentlichen Getriebesatz 2 nachgeschaltete weitere Übersetzung, ändert. Bei Geradeausstellung der
zu lenkenden Räder ($\varphi = 0$) ist bei einer Neigung $\beta$ der
Achsen 10 und 11 von 40° das Verhältnis $\frac{d\alpha}{d\varphi}$ gleich etwa
0,75, während es zu den beiden Endlagen des Lenkstockhebels 7 hin auf etwa 0,95 ansteigt, also um mehr als
25 % zunimmt. Die Gesamtübersetzung des Lenkgetriebes ist
in Geradeausstellung "direkter" als bei eingeschlagenen
Rädern, was bei Lenkungen ohne Hilfskraftunterstützung
erwünscht ist. Darüberhinaus erlaubt die Neigung der
Lenkwelle 8 zu der Abtriebswelle 6 des Lenkgetriebes
eine etwa senkrechte oder gar parallel zum Nachlaufwinkel des Rades geneigte Einbaulage der Lenkwelle 8
im Fahrzeug, so daß insgesamt eine erheblich verbesserte Auslegung der Lenkgestänge-Geometrie möglich ist.

Insbesondere bei Lenkungen mit Hilfskraftunterstützung kann - abweichend von der in den Fig. 1 und 2 dargestellten Ausführungsform - die mit der Lenkwelle 8 verbundene Drehachse 14 des Kardangelenks 9 in Geradeausstellung der gelenkten Räder auch in der die Achsen 10 und 11 von Lenkwelle 8 und Abtriebswelle 6 enthaltenden Ebene E liegen. Hierbei müßte die Abtriebswelle 6 anders, beispielsweise fliegend, im Lenkgehäuse gelagert sein. Es ergäbe sich eine Gesamtübersetzung, die in den Endlagen des Lenkstockhebels 7 "direkter" ist als in dessen Mittelstellung. Es ließe sich eine mit dem Einschlagen der Räder geringer werdende Übersetzung erreichen, um weniger Umdrehungen des Lenkrads beim Einparken od.dergl. zu erhalten. Die dabei an sich erhöhten Lenkkräfte sind wegen der Hilfskraftunterstützung für den Lenker des Kraftfahrzeugs weniger spürbar.

Für manche Anwendungsfälle kann es zweckmäßig sein, wenn die Neigung, d.h. der Winkel $\beta$ , zwischen der Achse 11 der Lenkwelle 8 und der Achse 10 der Abtriebswelle 6 veränderbar ist. Gemäß Fig. 4 kann hierzu das Lenkgehäuse aus zwei zueinander verschwenkbaren Gehäuseabschnitten 16 und 17 bestehen, deren gemeinsame Schwenkachse 18 durch die Gelenkmitte des Kardangelenks verläuft. Nach außen ist der Gelenkbereich durch eine an beiden Gehäuseabschnitten befestigte Dichtmanschette 19 abgedeckt. Der Gehäuseabschnitt 16 enthält das eigentliche konventionelle Lenkgetriebe, während in dem Gehäuseabschnitt 17 die Lenkwelle 8 gelagert ist.

Die in Fig. 4 angedeutete Bauart erfordert zwar geknickt verlaufende Lenkspindeln mit weiteren Kardan- oder Gleichlaufgelenken, sie kann aber trotzdem für Versuchszwecke interessant sein, da man mit geeigneten Verstelleinrichtungen gegebenenfalls sogar während der Fahrt die Getriebecharakteristik verändern kann.

Im Rahmen der Erfindung kann das den erfindungsgemäßen Effekt erbringende Kardangelenk u.U. auch mit einem Getriebesatz kombiniert werden, der für sich selbst bereits eine ungleichförmige Übersetzung hat.

- 8 -

Patentansprüche

1. Lenkgetriebe mit veränderlichem Übersetzungsverhältnis für Kraftfahrzeuge, mit einem Getriebesatz, der einerseits mit einer Lenkspindel und andererseits mit einer einen Lenkstockhebel od.dgl. tragenden Lenkwelle in Verbindung steht, dadurch gekennzeichnet, daß die Abtriebswelle (6) des Getriebesatzes (2) mit der Lenkwelle (8) über ein Kardangelenk (9) verbunden ist und die Achsen (10, 11) der Abtriebswelle (6) und der Lenkwelle (8) zueinander geneigt sind.

2. Lenkgetriebe nach Anspruch 1, dadurch gekennzeichnet, daß die Achsen (10, 11) der Abtriebswelle (6) und der Lenkwelle (8) in einer lotrechten Fahrzeuglängsebene liegen.

3. Lenkgetriebe nach Anspruch 1 oder 2, dadurch gekennzeichnet, daß die mit der Lenkwelle (8) verbundene Drehachse (14) des Kardangelenkes (9) in Geradeausstellung der gelenkten Räder senkrecht zu der die Achsen (10, 11) der Lenkwelle (8) und der Abtriebswelle (6) enthaltenden Ebene (E) verläuft.

4. Lenkgetriebe nach Anspruch 1 oder 2, insbesondere für eine Lenkung mit Hilfskraftunterstützung, dadurch gekennzeichnet, daß die mit der Lenkwelle (8) verbundene Drehachse (14) des Kardangelenkes (9) in Geradeausstellung der gelenkten Räder in der die Achsen (10, 11) der Lenkwelle (8) und Abtriebswelle (6) enthaltenden Ebene (E) liegt.

5. Lenkgetriebe nach einem der Ansprüche 1 bis 4, dadurch
gekennzeichnet, daß die Neigung (Winkel $\beta$ ) zwischen
der Achse (11) der Lenkwelle (8) und der Achse (10)
der Abtriebswelle (6) veränderbar ist.

6. Lenkgetriebe nach Anspruch 5, dadurch gekennzeichnet,
daß das Lenkgehäuse aus zwei zueinander verschwenkbaren Gehäuseabschnitten (16, 17) besteht, deren gemeinsame Schwenkachse (18) durch die Gelenkmitte des
Kardangelenkes verläuft.

Fig.1

Fig.4

Fig.2

Fig.3

| | | | |
|---|---|---|---|

**Europäisches Patentamt**

## EUROPÄISCHER RECHERCHENBERICHT

Nummer der Anmeldung

EP 78 100 632.5

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 1 981 673 (SACHSENWERK) <br> * Ansprüche 1, 3,6; Fig. 1 * | 1,5 |
| | CH - A - 86 437 (SINGER) <br> * Anspruch 1, Unteranspruch 2; Fig. 1 * | 1 |
| A | DE - A - 1 935 179 (CALOR-EMAG) <br> * ganzes Dokument * | 1 |
| A | GB - A - 1 491 477 (CLIMAX) <br> * Fig. 1, Positionen 22, 23, 24 * | 1,2 |
| D | DE - B - 1 209 011 (A.E. BISHOP) <br> * ganzes Dokument * | |
| D | DE - B - 1 155 987 (A.E. BISHOP) <br> * ganzes Dokument * | |
| D | DE - B - 1 124 835 (R. BORTSCH) <br> * ganzes Dokument * | |

**KLASSIFIKATION DER ANMELDUNG (Int.Cl.³)**

F 16 H 21/48
B 62 D 3/00

**RECHERCHIERTE SACHGEBIETE (Int. Cl.³)**

B 62 D 3/00
F 16 H 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 13-03-1979 | KÜHNE |

EPA form 1503.1   06.78